# EUROPEAN PATENT APPLICATION

(11) **EP 1 947 068 A1**
(43) Date of publication of application: **23.07.2008**
(21) Application number: 06812685.3
(22) Date of filing: 17.10.2006
(51) Int. Cl.: C04B 28/04, C04B 16/06

(54) **FORMULATION FOR OBTAINING A CONDUCTIVE CONCRETE MIXTURE**

(30) Priority: 17.10.2005 MX PA05011139
(71) Applicant: Concretos Translúcidos, S. de R.L. de C.V., C.P. 01020, México (MX)
(72) Inventor: GALVÁN CÁZARES, Sergio Omar, C.P. 01020, Mexico, D.F. (MX); SOSA GUTIÉRREZ, Joel, C.P. 01020, Mexico, D.F. (MX)
(74) Representative: Ungria Lopez, Javier
(86) International application number: PCT/MX2006/000111
(87) International publication number: WO 2007/046682

(57) **Abstract**

The invention relates to a conductive concrete through which electrical power can pass, such as to provide cathodic protection for the reinforcing steel and resistance to chemical attacks. The inventive conductive concrete mixture has greater mechanical strength properties than those of a standard concrete, low volume weight and mechanical characteristics that enable same to be used in both a structural and architectonic manner. In addition, the concrete is resistant to corrosion owing to the formulation thereof. The invention comprises an electricity conductor having a low water absorption value and a very low rupture deformation, thereby providing great structural stability. The purpose of the invention is to provide a type of concrete which is totally different from those currently available, owing to the formulation, mixture and novel characteristics thereof, and which is essentially **characterised in that** it combines the advantages of existing concretes with electrical conductivity. Moreover, the physical and chemical properties of the inventive concrete are greater than those of existing concretes, such as low volume weight.

## Description

### FIELD OF THE INVENTION

The present invention relates to an additive composition for cement that serves to obtain concrete having excellent electrical conductivity properties provided by the addition of a silver salt.

### PRIOR ART OF THE INVENTION

Currently, the concrete used in the construction industry is generally composed by at least, cement, water and aggregates (fine or coarse). As it is well known in the art, traditional concrete is a dielectric stony material of high density that prevents electric energy from passing through it, and even utilize it as conductor using the surface or the core without requiring wiring.

As it can be imagined a concrete with electrical conductivity properties would entail a considerable saving in internal wiring, and would favor a better interaction between the steel inside the concrete because it would protect it cathodically and thus would endow it with a longer usable life preventing it from corroding and thus creating a material with mechanical properties similar to those of traditional concrete but of lesser volumetric weight that would allow the conduction of electricity both on its surface and through its core without emitting electrical shocks when touching it, and that would additionally entail significant savings in the installation and maintenance expenses of the concrete elements.

Intending to eliminate these and other disadvantages, the idea of developing conductive concrete was conceived. The present patent application is intended to protect said idea that comprises the formula to produce concrete that allows the passage or conduction of electricity through it and which mechanical performance is more efficient than that of traditional concrete.

### DESCRIPTION OF THE INVENTION

The characteristic details of this innovative concrete are described in this section and also clearly illustrated by the figures and the explanation referring to the numbers shown in said figures.

This material object of the invention is a heterogeneous artificial stony material having characteristics similar to stone that are obtained by mixing cement, water, and fine and coarse aggregates in different proportions. The cement reacts with the water forming a resistant hard body called matrix that lends it the required rigidity. This matrix binds the grains of fine and coarse aggregates forming a whole.

Two different types of cement, standard type I Portland cement and a white cement, were selected to make the concrete object of the invention. Both types of selected concretes have a specific weight of 3.1 kg/dm3. The quantity of cement to be used will be that necessary to cover the aggregates once the mixture has been hydrated with water. The water used is calculated as a water/cement ratio that must range from 0.25 to 0.55, 0.3 being the optimal ratio. The type of aggregate to use in this concrete mix is "breeze" type mineral coal with a water absorption capacity between 20 and 35%. The granulometry of the aggregates to be used must be of at least an inch in diameter for the coarse aggregates and of no more than half an inch for the fines. The coarse aggregate portion must be of at least 50 % of the total weight of the aggregates added and no more than 70 %, 60% considered as the optimum percentage.

The fines must have both a good fine particle and mineral coal powder distribution that will serve to saturate the matrix and achieve a better electrical conductivity throughout the material.

The proportion of the later must be of at least 20% and not exceed 35% of the total fines weight. The silver phosphate affects the concrete's corrosion processes, preventing corrosion and favoring electrical conductivity and must be mixed with the water until a good solution is obtained. The amount of silver phosphate required for this formulation varies from 0.01 % to 1% of the total weight of the cement to be used, 0.75% considered as the optimum percentage. Glass fibers were used without subjecting them to oiling, sizing or binding, as well as materials with cut threads, milled fibers without binding, oiling or sizing which lengths ranged from 15 to 30 mm. These fibers were added to enhance the resistance to compression, flexion, tension and torsion of the concrete. The fiber content must be of at least 3 % and not exceed 8 % of the weight of the cement to be used, 5% considered as the optimum percentage.

The dosages used to produce conductive concrete must maintain a weight relationship of at least 1 part of cement per 0.4 of aggregates (fines and coarse particles) and no greater than a weight relationship of 1 part of cement to 2.75 parts of aggregates (fines and coarse particles), 0.52 and 0.85 being considered as the optimum weight ratio of aggregates (coarse particles and fines) for each part of cement.

The granulometry of the aggregates must not have a partial retention capacity greater than 40% in any screen and at least 8 % of the aggregate fines must go through a 0.150 (100) mesh size.

A superfluidifying agent is used as additive which function is to increase the workability of the material and reduce the amount of water required to hydrate the cement. The amount of superfluidifying agent added must not be lower than 5% of the volume of water used and no greater than 15%, 8% being considered the optimum percentage. This superfluidifying agent must be mixed with the water previously mixed with the silver phosphate, to ensure that both the cement and the aggregates will be in contact with these substances. The use of this superfluidifying agent is not subject to any chemical substance or content whatsoever, that is, any of such agents in the market can be used provided it fulfills the objective or reducing the amount of water required to render the concrete more fluid.

The coarse particles of mineral coal must be saturated with the water that will be used in the concrete formulation, in which the silver phosphate was previously diluted and to which the superfluidifying agent was added, and then all the coarse particles must be submerged in a recipient that allows the coal to absorb the water until it is fully saturated.

The mixing process entails the homogenization of the cement and the glass fibers and then the addition of the water and the coal previously saturated coal to then mix the obtained paste until a sufficiently workable or fluid mixture is obtained.

Then, the coal that will be used as fines is added, trying to distribute it uniformly on the surface of the mix and ensuring that there is not an excessive concentration in any one part. This process can be done manually or mechanically provided the correct dispersion of all the aggregates in the matrix is achieved, as well as the hydration of the cement.

Mixing time for small mixers must be of 5 minutes counted after all the ingredients except the aggregate fines are inside the mixer, and then after those 5 minutes the aggregate fines are added trying to pour them in small quantities to facilitate the mixing process and their correct homogenization. Once the aggregate fines have been incorporated all the ingredients must be mixed during an additional one and a half minute. For large mixers, including truck mixers, the first mixing stage must last at least three and a half minutes and the second mixing stage must last at least one and a half minute.

Water must not be added to the concrete after completing the mixing process, except to concrete premixed in truck mixers if it does not set as expected, then water and superfluidifying agent can be added in equal proportion provided it does not exceed by 5% the amount of water used originally in the mix, followed by a mixing time equal to that of the initial mixing (or about three and half minutes).

The premixed conductive concrete must be poured from the truck mixed before an hour and half has passed mixing.

The concrete can be laid manually or mechanically. The concrete must be compacted by either tamping or vibration or any method considered appropriate for achieving the appropriate compaction provided the aggregates are not hit in a manner that will cause them to fragment or separate from the mortar mix.

The concrete made according to this formulation presents good cohesive properties that allow it to behave plastically without crumbling or without the coarse coal particles separating from the mix, as well as displaying minimal exudation or the appearance of a film of water of the concrete's surface due to heavier solid particle settling.

This concrete, when fresh, maintains the aggregate particles surrounded by a film of slurry that separates them and lends them fluidity. The slurry is itself formed by cement particles suspended and water and saturated by the fines. This allows saturation of the matrix, thus creating a binding between the matrix and the coarse aggregate particles in which the fines act as a bridge that allows electrical conductivity, hence the necessity of using a superfluidifying agent that facilitates the dispersion of the aggregate fines over the entire matrix, and even on the aggregates, allowing a fluid and heterogeneous mix, that is, the grains of the aggregate fines fill the gaps between the aggregate coarse particles in such a manner that when compacted they have the maximum possible density. Therefore, the greater percentage of aggregate fines used in the making of this concrete, the lower its conductivity, since it would increase considerably the percentage of gaps in the mix, requiring more slurry in addition to having to be compacted by energetic means, the aggregate coarse particles migrate to the bottom and the small particles coated by a lot of slurry accumulate in the upper part, a fact that will diminish the conductivity and will foster cracking.

The initial setting occurs generally after 2 or 2 and 1/2 hours at 23°C, while final setting takes place after 4 and 5 hours.

The curing process for this concrete must take place at ambient temperature and will last between 3 and 10 days depending on the climate's degree of humidity.

The weigh of this concrete ranges from 900 to 1300 kilograms per cubic meter, depending on the allowed variations between aggregate and fiber content.

The mechanical characteristics such as resistance against compression of a conductive concrete with an aggregate coarse particles content (mineral coal) greater than 60 % can reach up to 50 MPa. It also has a resistivity when fresh between 200 and 280 Omega, and when dry (completely set) between 125 and 185 Omega.

The mechanical characteristics such as resistance against compression of a conductive concrete with an aggregate fines content (mineral coal) greater than 40% can reach up to 65 MPa. It also has a resistivity when fresh between 170 and 205 Omega, and when dry (completely set) between 95 and 145 Omega.

The durability of this concrete oscillates between 35 and 70 years due to the foreseeable change of service performance conditions, but provided there is an absence of adverse wear and tear conditions, it should have a longer life span, given that any concrete without appropriate protection becomes damaged. Due to its particular constitution this concrete is less porous and less permeable because of the low water/cement ratios, and a good compaction helps achieving a concrete resistant to severe chemical attack.

To ensure good concrete conductivity and a good, uniform resistance properties, aggregates, cement and other substances must be dosed by weight and the water and the superfluidifying agent by volume. This helps saving in cement and other substances, and therefore this type of dosing is indicated for large productions of this type of concrete.

Given the information above, it can be stated that these electrical conductivity and mechanical resistance characteristics as well as the low volumetric weight are traits that have not been achieved by any other concrete, and hence it possesses the physical and mechanical characteristics required to be a conductive concrete.

Other unique characteristics of this concrete are that it can be used for structural purposes while simultaneously being conductive, that is, it can be used for any type of construction project while retaining the electrical conductivity and the cathodic protection and resistance to corrosion that confer it longer usable life, not only to the concrete itself, but to the metal reinforcement that may be used in the manufacturing process, in addition to be able to be used as electrical conductor and have the additional property of impermeability, as well as having a volumetric weight of up to 35% less than a traditional concrete.

Having sufficiently described our invention, which we consider as an innovation and therefore we claim the contents of the following clauses as our exclusive property:

## Claims

1. Formulation to obtain a conductive concrete mix comprising a mix of type I standard Portland cement or white cement, glass fibers, silver phosphate, a superfluidifying agent and mineral coal with different granulometries that allow them to be used as coarse and fine aggregate particles respectively.

2. Formulation to obtain a conductive concrete mix according to claim 1. wherein the amount of water used is determined by the relation W/C (water / cement), which is between 0.25 and 0.55, and where 0.3 is considered as the optimum.

3. Formulation to obtain a conductive concrete mix according to claim 1, wherein the amount of glass fiber ranges from 3% to 8%, and where 5% is considered as the optimum percentage; the content of silver phosphate ranges from 0.01 % to 1 %.; the superfluidifying is less than 5 % of the volume of water used and no greater than 15%, and where 8% is considered as the optimum percentage.

4. Formulation to obtain a conductive concrete mix according to claim 1, wherein the the aggregate to be used is Breeze type mineral coal having a water absorption capacity of between 20 and 35%; the granulometry of the aggregates to be used must be of at least 2.54 cm (one inch) of diacubic meter for the aggregate coarse particles and no more than 1.27 cm (half an inch) for the aggregate fines; and where the aggregate coarse particles are at least 50 % of the total aggregates weight and does not exceed 70%, 60% being considered as the optimum percentage; the aggregate fines - both the fines and the mineral coal powder - must have a good distribution that will serve o saturate the matrix facilitating better electrical conductivity throughout the material; the required proportion for this to occur must be of at least 20% and not exceed 35 % of the total weight of aggregate fines.

5. Formulation to obtain a conductive concrete mix according to claim 1, **characterized in that** the ratio of cement to aggregate fine and coarse particles is of 1 to 0.4 and no greater than 1 part of cement per 2.75 parts of aggregate fines and of coarse particles, 0.52 and 0.85 being considered as the optimum weight ratio of aggregate coarse particles and fines per each part of cement.

6. Formulation to obtain a conductive concrete mix according to claims 1 and 2 **characterized in that** the aggregates granulometry has a partial retention lower than 40% in any screen and at least 8% of the aggregate fines must go through a 0.150 (100) mesh size.

7. Formulation to obtain a conductive concrete mix according to claims 1, 2 and 3, **characterized in that** it uses any of the currently available superfluidifying agents provided said agent fulfils the objective of reducing the amount of water used and of providing a better workability or fluidity to the concrete mix.

8. Formulation to obtain a conductive concrete mix according to claims 1, 2, 3 and 4, and **characterized in that** it displays good cohesive properties that allow said cement to behave plastically without crumbling or without the coal coarse particles separating, and also producing a minimum of exudation or the appearance of a water film on the surface of the concrete.

9. Formulation to obtain a conductive concrete mix according to claims 1 to 5 **characterized in that** in order to keep the aggregate particles surrounded or coated by a slurry film that keeps them separated and lends them fluidity, the slurry itself must be formed by cement particles suspended in water and saturated by aggregate fines that serve to saturate the matrix thus creating a bond between the matrix and the aggregate coarse particles that make said fines act as bridge that permits electrical conductivity.

10. Formulation to obtain a conductive concrete mix according to claims 1 to 6 **characterized in that** it has improved mechanical properties due to the addition of glass fibers, which serve to increase its mechanical resistance.

11. Formulation to obtain a conductive concrete mix according to claims 1 to 7 **characterized in** having a volumetric weight ranging from 900 to 1300 kilograms per cubic meter depending on the variations permitted in the aggregate and fiber contents.

12. Formulation to obtain a conductive concrete mix according to claims 1 to 8 **characterized in that** its mechanical and physical characteristics make it suitable for architectural purposes as well as structural purposes, in the same or even different service conditions that a traditional concrete.

13. Formulation to obtain a conductive concrete mix according to claims 1 to 8 **characterized in that** due to its characteristics and composition it may be a conductor for electricity in itself, whether fresh or completely set, not requiring internal wiring in any type of construction project.

14. Formulation to obtain a conductive concrete mix according to claims 1 to 8 **characterized in that** due to its constitution it is less porous and less permeable due to the water - cement relationship, and that good compaction renders it resistant to severe chemical attacks.

15. Formulation to obtain a conductive concrete mix according to claims 1 to 12 **characterized by** its durability, which oscillates between 35 and the 70 years.

16. Formulation to obtain a conductive concrete mix according to claims 1 to 12 **characterized in that** its resistivity while fresh is between 170 and 280 Omega, and between 90 and the 185 Omega when dry (completely set).

17. Formulation to obtain a conductive concrete mix according to claims 1 to 12 **characterized in that** its mechanical properties such as resistance to compression range from 50 MPa to 65 MPa.

18. Formulation to obtain a conductive concrete mix according to claims 1 to 15 **characterized in that** the paste is 35 % lighter than that of a traditional concrete.

19. Formulation to obtain a conductive concrete mix according to claims 1 to 15 **characterized in that** it can be used for structural purposes as well as conductive purposes, that is, it can be used in any construction project while also allowing electrical conduction.

20. Formulation to obtain a conductive concrete mix according to claims 1 to 16 **characterized in that** it that provides cathodic protection of the steel reinforcement, a characteristic that lends it a longer usable life, not only to the concrete element itself but also to the metal reinforcement used in the manufacturing process,

21. Formulation to obtain a conductive concrete mix according to claims 1 to 17 **characterized in that** it is resistant to corrosion.
